# EUROPEAN PATENT SPECIFICATION

(11) **EP 2 636 599 B1**
(45) Date of publication and mention of the grant of the patent: **20.02.2019**
(21) Application number: 13158474.0
(22) Date of filing: 08.03.2013
(51) Int. Cl.: B64D 15/20, B64D 15/22

(54) **Supercooled large drop icing condition detection system**
Supergekühltes Großtropfen-Eis-Erkennungssystem
Système de détection d'état de givrage de goutte d'eau de grande taille en surfusion

(30) Priority: 08.03.2012 US 201213414894
(43) Date of publication of application: 11.09.2013
(73) Proprietor: The Boeing Company, Chicago, IL 60606-1596 (US)
(72) Inventor: Meis, Charles Steven, Renton, WA Washington 98058 (US); Bosetti, Cris Kevin, Seattle, WA Washington 98117 (US)
(74) Representative: Howson, Richard Giles Bentham

(56) References cited:
- US-A- 3 517 900
- US-A- 4 553 137
- US-A- 5 484 121
- US-A1- 2010 123 044
- US-B1- 6 347 767
- US-B1- 7 439 877

## Description

### BACKGROUND

The present disclosure relates generally to detecting icing conditions and, in particular, to icing conditions for an aircraft. Still more particularly, the present disclosure relates to detecting supercooled water drops, including supercooled large drops (SLD).

In aviation, icing on an aircraft may occur when the atmospheric conditions lead to the formation of ice on the surfaces of the aircraft. Further, this ice also may occur within the engine. Ice forming on the surfaces of the aircraft, on inlets of an engine, and other locations are undesirable and potentially unsafe for operating the aircraft.

Icing conditions may occur when drops of supercooled liquid water are present. In these illustrative examples, water is considered to be supercooled when the water is cooled below the stated freezing point for water but is still in a liquid form. Icing conditions may be characterized by the size of the drops, the liquid water content, air temperature, and other parameters. These parameters may affect the rate and extent at which ice forms on an aircraft.

When icing occurs, the aircraft does not operate as desired. For example, ice on the wing of an aircraft will cause the aircraft to stall at a lower angle of attack and have an increased drag.

Aircraft may have mechanisms to prevent icing, remove ice, or some combination thereof to handle these icing conditions. For example, aircraft may include icing detection, prevention, and removal systems. Ice may be removed using deicing fluid, infrared heating, and other suitable mechanisms.

Aircraft may be certified for operating during different types of icing conditions. Some aircraft may be certified to operate in normal icing conditions but not those that include supercooled large drops. Currently used sensors are unable to differentiate between normal and supercooled large drop icing conditions. Therefore, it would be desirable to have a method and apparatus that takes into account one or more of the issues discussed above as well as possibly other issues.

### SUMMARY

According to one aspect, there is provided an ice detection system (806) comprising:
a first sensor (400) located on a leading edge (412) of a vertical stabilizer (120) on an aircraft (100), wherein the first sensor (400) is configured to detect a first type of icing condition (858) for the aircraft (100);
a second sensor (402) located on a first side (414) of the vertical stabilizer (120), wherein the second sensor (402) is configured to detect a second type of icing condition (860) for the aircraft (100); and
a third sensor (404) located on a second side (416) of the vertical stabilizer (120), wherein the third sensor (404) is configured to detect the second type of icing condition (860) for the aircraft (100);
wherein a first location (406) of the first sensor (400) on the leading edge (412) is configured to expose the first sensor (400) to first drops (850) of water for the first type of icing condition (858) and wherein a second location (408) of the second sensor (402) on the first side (414) and a third location (410) of the third sensor (404) on the second side (416) are configured to expose the second sensor (402) and the third sensor (404) to second drops (852) of water for the second type of icing condition (860); and
wherein the first location (406) is a first height above a fuselage (106) of the aircraft (100), the second location (408) is a second height above the fuselage (106) of the aircraft (100), and the third location (410) is a third height above the fuselage (106) of the aircraft (100).

According to another aspect there is provided a method for detecting icing conditions, the method comprising:
monitoring a first sensor (400) located on a leading edge (412) of a vertical stabilizer (120) on an aircraft (100) for first data (202) indicating a first type of icing condition (858) for the aircraft (100);
monitoring a second sensor (402) located on a first side (414) of the vertical stabilizer (120) and a third sensor (404) located on a second side (416) of the vertical stabilizer (120) for second data (202) indicating a second type of icing condition (860) for the aircraft (100); and
initiating an action in response to detecting at least one of the first type of icing condition (858) from the first data (202) and the second type of icing condition (806) from the second data (202);
wherein a first location (406) of the first sensor (400) on the leading edge (412) is configured to expose the first sensor (400) to first drops (850) of water for the first type of icing condition (858) and wherein a second location (408) of the second sensor (402) on the first side (414) and a third location (410) of the third sensor (404) on the second side (416) are configured to expose the second sensor (402) and the third sensor (404) to second drops (852) of water for the second type of icing condition (860); and
wherein the first location (406) is a first height above a fuselage (106) of the aircraft (100), the second location (408) is a second height above the fuselage (106) of the aircraft (100), and the third location (410) is a third height above the fuselage (106) of the aircraft (100).

In one illustrative embodiment, an ice detection system comprises a first sensor located on a leading edge of a vertical stabilizer on an aircraft, a second sensor located on a first side of the vertical stabilizer, and a third sensor located on a second side of the vertical stabilizer. The first sensor is configured to detect a first type of icing condition for the aircraft. The second sensor is configured to detect a second type of icing condition for the aircraft. The third sensor is configured to detect the second type of icing condition for the aircraft.

In another illustrative embodiment, an ice detection system comprises a first sensor located on a leading edge of a vertical stabilizer on an aircraft, a second sensor located on a first side of the vertical stabilizer, a third sensor located on a second side of the vertical stabilizer, and a processor unit. The first sensor is in a first location configured to detect a normal icing condition for the aircraft. The second sensor is in a second location configured to detect a supercooled large drop type of icing condition for the aircraft. The second side is opposite of the first side. The third sensor is in a third location configured to detect a supercooled large drop type of icing condition for the aircraft. The processor unit is configured to monitor data from the first sensor, the second sensor, and the third sensor. The processor unit is further configured to perform an action in response to the data indicating a presence of at least one of the normal icing condition and the supercooled large drop type of icing condition.

In yet another illustrative embodiment, a method for detecting icing conditions is present. A first sensor located on a leading edge of a vertical stabilizer on an aircraft is monitored for first data indicating a first type of icing condition for the aircraft. A second sensor located on a first side of the vertical stabilizer and a third sensor located on a second side of the vertical stabilizer are monitored for second data indicating a second type of icing condition for the aircraft. An action is initiated in response to detecting at least one of the first type of icing condition from the first data and the second type of icing condition from the second data.

The features and functions can be achieved independently in various embodiments of the present disclosure or may be combined in yet other embodiments in which further details can be seen with reference to the following description and drawings.

US 6347767 relates to an apparatus for detecting conditions that involve a risk of ice formation on the surface of aircraft in movement, based on temperature measurement, includes two temperature measuring elements disposed at the surface in points having different air pressures, a device for recording the change of the temperature difference between the points with time, and a device for detection and corresponding indication based on the recording, and at least one temperature measuring element for absolute temperature.

US 4553137 relates to an improved ice detector has a vibrating element which has a front portion and vibrating means suitably disposed with respect to the vibrating element for exciting the vibrating element into vibration and means for sensing a shift of the frequency of vibration of the vibrating element resulting from a change of mass of the vibrating element due to ice accumulating thereon. The improvement is characterized in that the ice detector is supported with respect to a surface exposed to an air stream such that a cap on which ice forms and which is disposed on the front portion of the vibrating element, is exposed to the air stream and is formed to be substantially conformal to such surface.

The present invention is set out in the independent claims, with some optional features set out in the claims dependent thereto.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of an aircraft in accordance with an illustrative embodiment;
**Figure 2** is an illustration of components in an ice detection system in accordance with an illustrative embodiment;
**Figure 3** is an illustration of an airfoil in accordance with an illustrative embodiment;
**Figure 4** is an illustration of sensors on a vertical stabilizer in accordance with an illustrative embodiment;
**Figure 5** is an illustration of a cross-sectional view of a vertical stabilizer with sensors in accordance with an illustrative embodiment;
**Figure 6** is an illustration of a sensor in accordance with an illustrative embodiment;
**Figure 7** is an illustration of a cross-sectional view of a sensor installed in a vertical stabilizer in accordance with an illustrative embodiment;
**Figure 8** is an illustration of a block diagram of a design environment in accordance with an illustrative embodiment;
**Figure 9** is an illustration of a flowchart of a process for detecting icing conditions for an aircraft in accordance with an illustrative embodiment;
**Figure 10** is an illustration of a flowchart of a process for designing an ice detection system in accordance with an illustrative embodiment;
**Figure 11** is an illustration of a data processing system in accordance with an illustrative embodiment;
**Figure 12** is an illustration of an aircraft manufacturing and service method in accordance with an illustrative embodiment; and
**Figure 13** is an illustration of an aircraft in which an illustrative embodiment may be implemented.

### DETAILED DESCRIPTION

The illustrative embodiments recognize and take into account a number of different considerations. For example, the different illustrative embodiments recognize and take into account that currently used systems for detecting icing conditions on an aircraft are unable to detect all of the different types of icing conditions that may occur. For example, the different illustrative embodiments recognize and take into account that as the size of the drops of water increases, currently used sensors may not detect icing caused by those drops of water. The different illustrative embodiments recognize and take into account that the locations at which different sizes of drops will collide with an airfoil during operation of an aircraft change, depending on the size of the drops.

The illustrative embodiments recognize and take into account that it is desirable to detect different types of icing conditions that may be caused by different sizes of drops of water. In particular, the illustrative embodiments recognize and take into account that it may be desirable to detect drops of supercooled liquid water. These drops may take the form of supercooled large drops.

Thus, one or more illustrative embodiments provide a method and apparatus for detecting ice. In one illustrative embodiment, an ice detection system comprises a first sensor, a second sensor, and a third sensor. The first sensor is located on a leading edge of a vertical stabilizer on an aircraft. The first sensor is configured to detect a first type of icing condition for the aircraft.

A second sensor is located on a first side of the vertical stabilizer. The second sensor is configured to detect a second type of icing condition for the aircraft. A third sensor is located on a second side of the vertical stabilizer. The third sensor is configured to detect the second type of icing condition for the aircraft. These two types of icing conditions are examples of icing conditions that may occur in different locations on the aircraft.

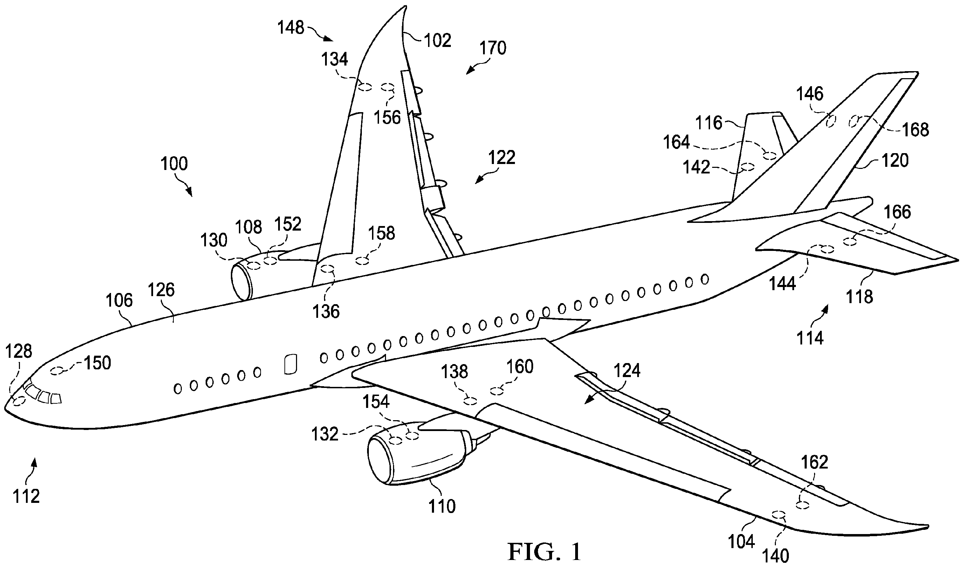

With reference now to the figures and, in particular, with reference to **Figure 1****,** an illustration of an aircraft is depicted in accordance with an illustrative embodiment. In this illustrative example, aircraft **100** has wing **102** and wing **104** attached to fuselage **106.** Aircraft **100** also includes engine **108** attached to wing **102** and engine **110** attached to wing **104.**

Fuselage **106** has nose section **112** and tail section **114.** Nose section **112** is the forward part of aircraft **100,** while tail section **114** is the aft part of aircraft **100.** Horizontal stabilizer **116,** horizontal stabilizer **118,** and vertical stabilizer **120** are attached to tail section **114** of fuselage **106.**

Aircraft **100** is an example of an aircraft in which ice detection system **122** may be implemented in accordance with an illustrative embodiment. In these illustrative examples, ice detection system **122** comprises sensors **124** on surface **126** of aircraft **100.** As depicted, sensors **124** include sensors **128, 130, 132, 134, 136, 138, 140, 142, 144,** and **146.** These sensors form first group of sensors **148** in sensors **124** for ice detection system **122.**

Additionally, sensors **124** also include sensors **150, 152, 154, 156, 158, 160, 162, 164, 166,** and **168.** These sensors form second group of sensors **170** in sensors **124** for ice detection system **122.** In the illustrative examples, sensors **124** may detect when ice is formed on the sensors.

As depicted, first group of sensors **148** is in a first group of locations on surface **126** of aircraft **100.** First group of sensors **148** is configured to detect a first type of icing condition for aircraft **100.** Second group of sensors **170** is in a second group of locations on surface **126** of aircraft **100.** Second group of sensors **170** in the second locations is configured to detect a second type of icing condition for aircraft **100.**

In these illustrative examples, these icing conditions may occur at different altitudes and temperatures that cause the formation of ice on aircraft **100.** For example, icing conditions may be present at an altitude from about sea level to about 30,000 feet when the temperature is from about -40 degrees Celsius to about zero degrees Celsius. Of course, other altitudes and temperatures may be present at which ice may be formed from water that contacts surface **126** of aircraft **100.** Icing conditions also may be present when the liquid water content in the drops is from about 0.4 to about 2.8 grams/cubic meter at the altitude and temperature range described above.

As depicted, the first type of icing condition and the second type of icing condition are caused by drops of water of different sizes. Although the altitude, temperature, and liquid water content ranges may be the same, one difference between the first and second types of icing conditions is the drop size.

In these illustrative examples, the first type of icing condition may be present when the size of the drops is from about 0.00465 millimeters in diameter to about 0.111 millimeters in diameter. Drops with these sizes may be referred to as normal drops. The second type of icing condition may be present when the size of the drops includes drops that have a diameter greater than about 0.111 millimeters. Drops having a size greater than about 0.111 millimeters may be referred to as large drops and, in particular, may be called supercooled large drops under the altitude, temperature, and liquid water content conditions described above. For example, the drops may have a diameter with a range from about 0.112 millimeters to about 2.2 millimeters. In addition, the second type of icing condition may include drops that are about 0.111 millimeters or less when drops greater than about 0.111 millimeters are present.

As depicted, first group of sensors **148** in the first group of locations may be configured to detect ice formed by drops of water in a first number of sizes. Second group of sensors **170** in the second group of locations is configured to detect ice formed by drops of water having a second number of sizes. In these illustrative examples, the first number of sizes is smaller than the second number of sizes.

For example, the first number of sizes may be from about 0.00465 millimeters in diameter to about 0.111 millimeters in diameter. The second number of sizes may be from about 0.112 millimeters to about 2.2 millimeters in diameter.

The second number of sizes of the drops of water may be drops of water that are considered to be drops of supercooled water. These drops of supercooled water may be supercooled large drops (SLD). First group of sensors **148** is configured to detect drops of water that are not supercooled large drops in these illustrative examples. The type of icing condition detected by sensors **124** is based on the locations for sensors **124** on surface **126** of aircraft **100** in these illustrative examples.

In the illustrative examples, the first type of icing condition may be referred to as a normal icing condition. The second type of icing condition may be referred to as a supercooled large drop icing condition.

In these illustrative examples, sensors **124** are depicted as flush-mounted sensors. In other words, sensors **124** are substantially flush or planar with surface **126** of aircraft **100.** Sensors **124** may be implemented using all of the same type of sensors or different types of sensors. Further, other numbers of sensors **124** and locations of sensors **124** may be used in addition to or in place of those illustrated for aircraft **100** in **Figure 1****.**

Although particular conditions and sizes for drops have been described for the first icing condition and the second icing condition, the different illustrative embodiments are not limited to the conditions and sizes depicted. For example, other altitudes and drop sizes may be used to define when drops of water are present for the first icing condition and the second icing condition.

However, while **Figure 1** illustrates embodiments using a twin-engine aircraft, the illustrative embodiments recognize and take into account that the information contained is also applicable to aircraft with different numbers of engines. Further, the illustrative example depicts aircraft **100** as a commercial aircraft. The different illustrative embodiments may be applied to other types of aircraft, such as military aircraft.

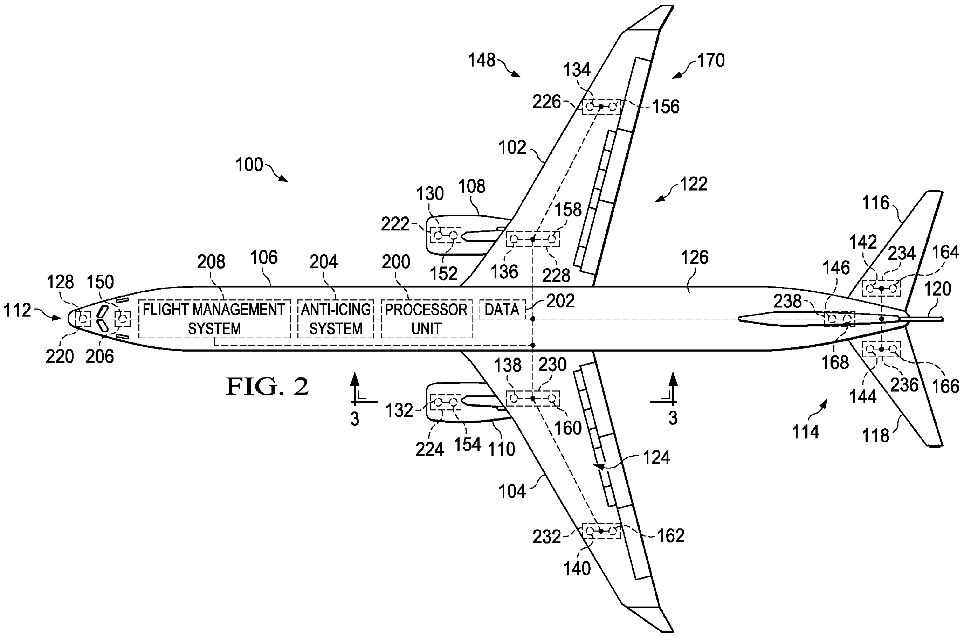

With reference now to **Figure 2****,** an illustration of components in an ice detection system is depicted in accordance with an illustrative embodiment. In this illustrative example, ice detection system **122** further comprises processor unit **200.** Processor unit **200** is a hardware device configured to perform operations with respect to detecting icing conditions for aircraft **100.** These operations may be implemented in software, hardware, or a combination of the two.

As illustrated, processor unit **200** is connected to sensors **124.** In these illustrative examples, sensors **124** generate data **202.** Data **202** may indicate whether sensors **124** detect the formation of ice on surface **126** of aircraft **100.** Ice is detected by sensors **124** when ice forms on one or more of sensors **124.** Sensors **124** send data **202** to processor unit **200.**

In these illustrative examples, processor unit **200** is configured to monitor the data from first group of sensors **148** and second group of sensors **170.** Further, processor unit **200** is configured to perform an action in response to the data indicating a presence of one of the icing conditions. The particular type of icing condition detected depends on which group of sensors generating data indicates a presence of ice. In other words, the first icing condition, the second icing condition, or both the first icing condition and the second icing condition may be present, depending on the data generated by sensors **124.**

The action may include at least one of generating an alert, generating a log entry, activating anti-icing system **204,** sending a report, and other suitable actions. As used herein, the phrase "at least one of", when used with a list of items, means different combinations of one or more of the listed items may be used and only one of each item in the list may be needed. For example, "at least one of item A, item B, and item C" may include, without limitation, item A, or item A and item B. This example also may include item A, item B, and item C, or item B and item C.

In these illustrative examples, the alert may be generated on flight deck interface **206** for aircraft **100.** Flight deck interface **206** is a display system located in the flight deck of aircraft **100.** The display system comprises a number of displays on which information may be displayed to operators. These displays are hardware devices in the illustrative examples.

As used herein, a "number", when used with reference to items, means one or more items. For example, "a number of displays" is one or more displays. The number of displays may include, for example, without limitation, a primary flight display, a navigation display, and other suitable types of displays.

Further, the log entry may be generated in flight management system **208.** Flight management system **208** is a computer system in aircraft **100.** This computer system may be comprised of a number of computers. When more than one computer is present in the computer system, those computers may be in communication with each other using a communications media, such as a local area network.

Processor unit **200** may send a report to flight management system **208.** Alternatively, the report may be sent to a remote location in addition to or in place of sending the report to flight management system **208.** In these illustrative examples, the report may include an indication of what type of icing condition or conditions is present. This report also may include a location of the sensor or sensors detecting the icing condition.

Another action that processor unit **200** may take is to initiate the operation of anti-icing system **204.** Anti-icing system **204** may be implemented using any currently available anti-icing system. Anti-icing system **204** may employ different types of mechanisms to remove or prevent the formation of ice on surface **126** of aircraft **100.** For example, anti-icing system **204** may employ mechanical systems, chemical systems, infrared heating systems, and other types of systems to remove ice, prevent the formation of ice, or both on surface **126** of aircraft **100.**

In these illustrative examples, sensors **124** may be configured in ice detection assemblies. For example, sensors **124** may be grouped as ice detection assemblies **220, 222, 224, 226, 228, 230, 232, 234, 236,** and **238.** Each sensor in an ice detection assembly may be configured to detect a particular type of icing condition. This type of grouping of sensors **124** may be used in selecting locations for sensors **124.** Of course, in some illustrative examples, sensors **124** may not be grouped in ice detection assemblies.

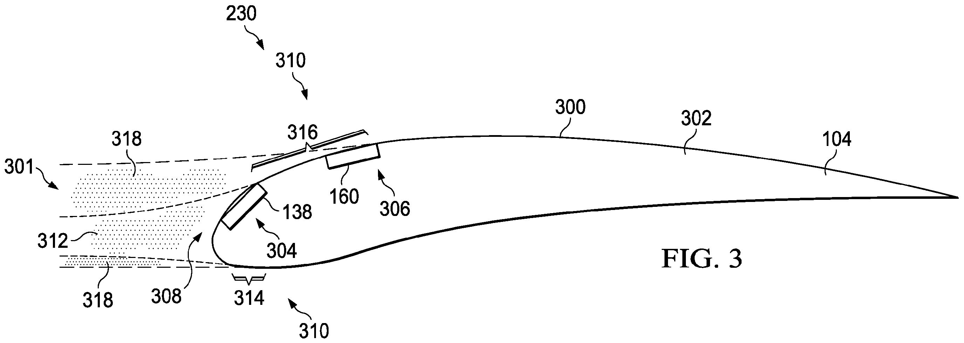

With reference now to **Figure 3****,** an illustration of an airfoil is depicted in accordance with an illustrative embodiment. In this illustrative example, airfoil **300** is wing **104** seen taken along lines **3-3** in **Figure 2****.** A flow of drops **301** with respect to airfoil **300** is illustrated. Locations where drops **301** collide with surface **302** are depicted in this illustrative example.

As depicted, sensor **138** and sensor **160** may be configured as ice detection assembly **230** on surface **302.** In this illustrative example, sensor **138** is a first sensor located in first location **304,** while sensor **160** is a second sensor located in second location **306.**

In these illustrative examples, first location **304** is located in first region **308,** and second location **306** is located in second region **310.** As depicted, first region **308** is further forward on airfoil **300** than second region **310.**

In these illustrative examples, first region **308** is comprised of a number of locations. This number of locations may be contiguous or non-contiguous with each other, depending on the particular implementation. In this example, these locations are all contiguous. First region **308** is a region in which first drops **312** collide with surface **302** of airfoil **300** for aircraft **100** in **Figure 1****.**

Second region **310** is also a number of locations that may be contiguous or non-contiguous with each other. In this example, these locations are non-contiguous. For example, a first portion of the number of locations may be in section **314,** while a second portion of the number of locations may be in section **316.** Second region **310** is a region in which second drops **318** collide with surface **302** of airfoil **300** for aircraft **100.** First drops **312** collide with surface **302** in first region **308** when a first type of icing condition is present. Second drops **318** collide with surface **302** in second region **310** when a second type of icing condition is present.

In these illustrative examples, sensor **138** in first location **304** is configured to detect the formation of ice when a first type of icing condition is present, while sensor **160** in second location **306** is configured to detect the formation of ice when a second type of icing condition is present. In some cases, both types of icing conditions may be present at the same time.

In these illustrative examples, first drops **312** and second drops **318** are supercooled drops of water. These drops of water may be rain drops. The drops may have sizes ranging from about 0.00465 millimeters to about 2.2 millimeters in average diameter.

In these illustrative examples, normal drops are drops of water typically with sizes less than about 0.111 millimeters in average diameter. These drops may freeze when colliding with first region **308** of surface **302** of airfoil **300.** Drops of water in freezing drizzle drops may have a diameter that is less than about 0.5 millimeters. These drops may freeze when colliding with second region **310** of surface **302** of airfoil **300.** Drops of freezing rain may have a diameter that is up to about 2.2 millimeters. These drops may freeze when colliding even further aft on second region **310** of surface **302** of airfoil **300.**

In these illustrative examples, freezing drizzle is drizzle that may freeze on contact with surface **302** of airfoil **300.** Freezing drizzle may have a diameter that is less than about 0.5 millimeters. Freezing rain is rain that may freeze when colliding with surface **302** of airfoil **300** and may have a diameter that is up to about 2.2 millimeters.

Drops of water may be supercooled in various environments, such as in stratiform and cumulous clouds. However, supercooled large drops typically only form in cumulous clouds.

In these illustrative examples, first drops **312** may be, for example, normal supercooled drops. Normal supercooled drops are drops of supercooled water that may have a diameter from about 0.00465 millimeters to about 0.111 millimeters. As depicted, second drops **318** may be supercooled large drops. These drops may have a diameter with a size from about 0.112 millimeters to about 2.2 millimeters.

In these illustrative examples, the different sizes between first drops **312** and second drops **318** result in first drops **312** and second drops **318** colliding with surface **302** of airfoil **300** in different locations. In these illustrative examples, the locations for the different drops are defined by first region **308** and second region **310.**

As a result, placement of sensor **138** is selected such that sensor **138** will detect a first type of icing condition caused by first drops **312.** Sensor **160** is in second location **306** and is configured to detect a second type of icing condition caused by second drops **318** in these illustrative examples. In other words, the placement of sensor **138** and sensor **160** on surface **302** of airfoil **300** may be selected to detect different types of icing conditions. The location selected may depend on the configuration of airfoil **300.**

The illustrations of aircraft **100** with ice detection system **122** in **Figures 1-3** are not meant to imply physical or architectural limitations to the manner in which an illustrative embodiment may be implemented. Other components in addition to and/or in place of the ones illustrated may be used. Some components may be unnecessary in some illustrative embodiments. Also, some components are shown in physical implementations, while other components are shown as blocks. Blocks are presented to illustrate some functional components. One or more of the blocks illustrated may be combined, divided, or combined and divided into different blocks when implemented in an illustrative embodiment.

For example, aircraft **100** is shown in the form of an airplane. Of course, aircraft **100** may take other forms. For example, without limitation, aircraft **100** also may take the form of a helicopter. Also, although aircraft **100** is illustrated as a commercial aircraft, the different illustrative embodiments may be applied to military aircraft and other types of aircraft, depending on the particular implementation. For example, aircraft 100 also may be applied to an aircraft that may fly in the air as well as enter outer space, although icing conditions do not exist at altitudes that are considered outer space.

In still another illustrative example, although sensors **124** are shown as grouped into ice detection assemblies, other illustrative embodiments may not employ ice detection assemblies. In other words, groupings of sensors into assemblies may not be used, depending on the particular implementation. In some illustrative examples, processor unit **200** may be considered part of flight management system **208** instead of a separate component in the illustrative examples.

Further, other numbers of sensors may be used other than those illustrated for aircraft **100.** The number of sensors used may depend on the particular type of aircraft. For example, the number of sensors and their locations may change, depending on the size and configuration of airfoils on aircraft **100.** In still other illustrative examples, the sensors may all be the same type of sensors or different types of sensors. For example, sensors **124** may be implemented using a sensor configured to detect a presence or formation of ice in these illustrative examples.

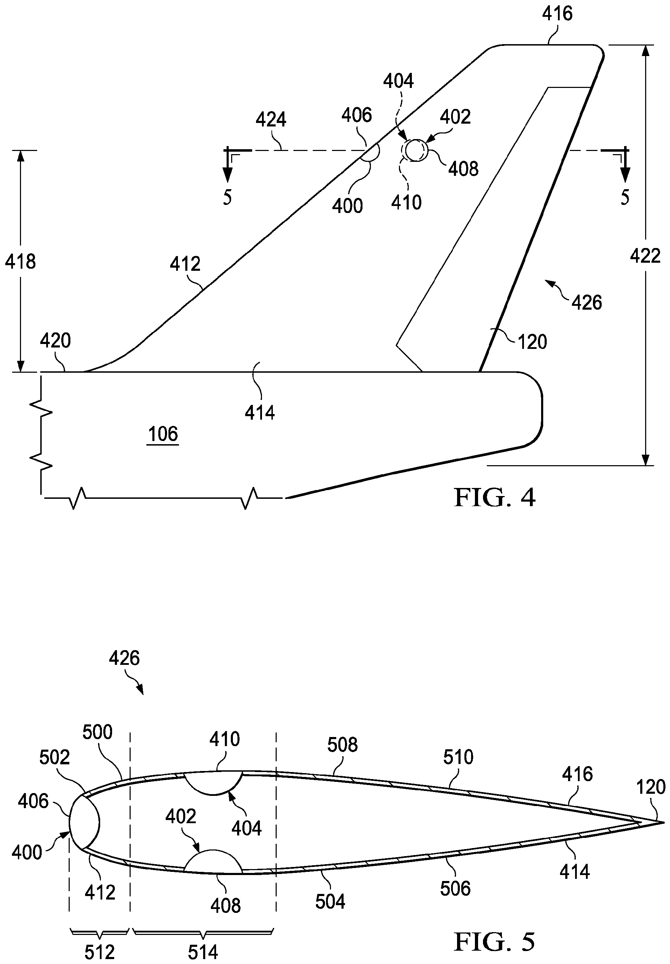

Turning next to **Figure 4****,** an illustration of sensors on a vertical stabilizer is depicted in accordance with an illustrative embodiment. An enlarged view of vertical stabilizer **120** in tail section **114** is illustrated. In this illustrative example, another configuration of sensors for detecting different types of icing conditions for aircraft **100** is depicted in accordance with an illustrative embodiment.

As depicted, first sensor **400,** second sensor **402,** and third sensor **404** are present on vertical stabilizer **120.** First sensor **400** is in first location **406,** second sensor **402** is in second location **408,** and third sensor **404** is in third location **410.** These sensors are examples of sensors that may be used in addition to or in place of the sensors shown in **Figure 1****.**

First sensor **400** in first location **406** is located on leading edge **412** of vertical stabilizer **120.** Second sensor **402** in second location **408** is located on first side **414** of vertical stabilizer **120.** Third sensor **404** in third location **410** is located on second side **416** of vertical stabilizer **120.**

As illustrated, first location **406** for first sensor **400,** second location **408** for second sensor **402,** and third location **410** for third sensor **404** have height **418** above top **420** of fuselage **106.** In this illustrative example, top **420** is where vertical stabilizer **120** is attached to fuselage **106** at leading edge **412** of vertical stabilizer **120.** Height **418** may be the same or different for each of these locations.

In one illustrative example, height **418** may be selected to be about one half of height **422** of vertical stabilizer **120.** Of course, height **418** may be selected in other ways so that the sensors are capable of detecting the different types of icing conditions.

In this illustrative example, second sensor **402** and third sensor **404** are located further aft of first sensor **400.** As depicted, first sensor **400,** second sensor **402,** and third sensor **404** are located along line **424.** Line **424** may be aligned with an axis extending centrally through fuselage **106,** and line **424** may extend from first location **406** in a direction aft of leading edge **412** of vertical stabilizer **120** in these illustrative examples. The alignment of second sensor **402** in second location **408** and third sensor **404** in third location **410** may take the form of a chordwise surface distance aft of first location **406** of first sensor **400.**

In this illustrative example, first sensor **400,** second sensor **402,** and third sensor **404** are part of ice detection assembly **426.** For example, first sensor **400** is a sensor in first group of sensors **148,** while second sensor **402** and third sensor **404** are sensors in second group of sensors **170** in **Figure 1****.**

As depicted, first sensor **400** is configured to detect the first type of icing condition for aircraft **100** in **Figure 1****.** Second sensor **402** and third sensor **404** are configured to detect the second type of icing condition for aircraft **100.**

In these illustrative examples, the location of first sensor **400,** second sensor **402,** and third sensor **404** provides an ability to identify a location at which icing occurs during operation of aircraft **100.** For example, if first sensor **400** detects ice, icing conditions may be identified at first location **406** along leading edge **412.** If second sensor **402** detects ice, then icing conditions are identified as being present at second location **408** on first side **414** of vertical stabilizer **120.** If third sensor **404** detects ice, then icing conditions are identified as being present at third location **410** on second side **416** of vertical stabilizer **120.**

Further, detection of ice by first sensor **400** indicates that a first type of icing condition is present. In these illustrative examples, the first type of icing condition is a normal icing condition. Detection of ice by second sensor **402,** third sensor **404,** or both indicates a presence of a second type of icing condition. The second type of icing condition is a supercooled large drop icing condition in these illustrative examples.

More specifically, first location **406** for first sensor **400** is selected such that first drops for the first type of icing condition collide with first sensor **400.** Second location **408** for second sensor **402** and third location **410** for third sensor **404** are selected such that second drops for the second type of icing condition collide with one or both of these sensors.

The combination of first sensor **400,** second sensor **402,** and third sensor **404** may reduce the effect of oscillations that aircraft **100** may have on detecting icing conditions. In other words, the locations of these sensors may reduce the effect of movement, such as, for example, pitch, yaw, or both, of aircraft **100** while detecting icing conditions.

The installation of first sensor **400,** second sensor **402,** and third sensor **404** on vertical stabilizer **120** may provide advantages over placing sensors on wing **102** or wing **104** of aircraft **100** in **Figure 1****.** For example, placing sensors on the leading edge of wing **102** or wing **104** of aircraft **100** may be complicated by the interaction of moveable control surfaces on the leading edges of these wings. Vertical stabilizer **120** does not include moveable control surfaces on leading edge **412.**

Further, wiring for sensors in wing **102** or wing **104** of aircraft **100** may be complicated because of the presence of fuel tanks in these wings. Fuel tanks are typically not present within vertical stabilizer **120.** As a result, increased complexity, design cost, and installation issues may be avoided through the placement of first sensor **400,** second sensor **402,** and third sensor **404** on vertical stabilizer **120.**

Turning now to **Figure 5****,** an illustration of a cross-sectional view of a vertical stabilizer with sensors is depicted in accordance with an illustrative embodiment. A cross-sectional view of vertical stabilizer **120** taken along lines **5-5** in **Figure 4** is illustrated.

As can be seen in this illustrative example, first sensor **400** in first location **406** is mounted to be substantially flush to surface **500** of leading edge **412.** Further, first sensor **400** has a shape that substantially conforms to curvature **502** of surface **500** at leading edge **412** of vertical stabilizer **120.**

Second sensor **402** is substantially flush to first surface **504** on first side **414** of vertical stabilizer **120.** Second sensor **402** has a shape that substantially conforms to curvature **506** of first surface **504** on first side **414** of vertical stabilizer **120.**

In a similar fashion, third sensor **404** is substantially flush to second surface **508** on second side **416** of vertical stabilizer **120.** Third sensor **404** also has a shape that substantially conforms to curvature **510** of second surface **508** on second side **416** of vertical stabilizer **120.**

Further, first location **406** is in first region **512.** First region **512** is a region in which first drops for the first type of icing condition collide with surface **500** of vertical stabilizer **120.** Second location **408** is located on first surface **504** on first side **414** in second region **514** in which second drops for the second type of icing condition collide with first surface **504.** Third location **410** is located on second surface **508** on second side **416** in second region **514** in which second drops for the second type of icing condition also may collide with second surface **508.** These regions are similar to first region **308** and second region **310** as described in **Figure 3****.**

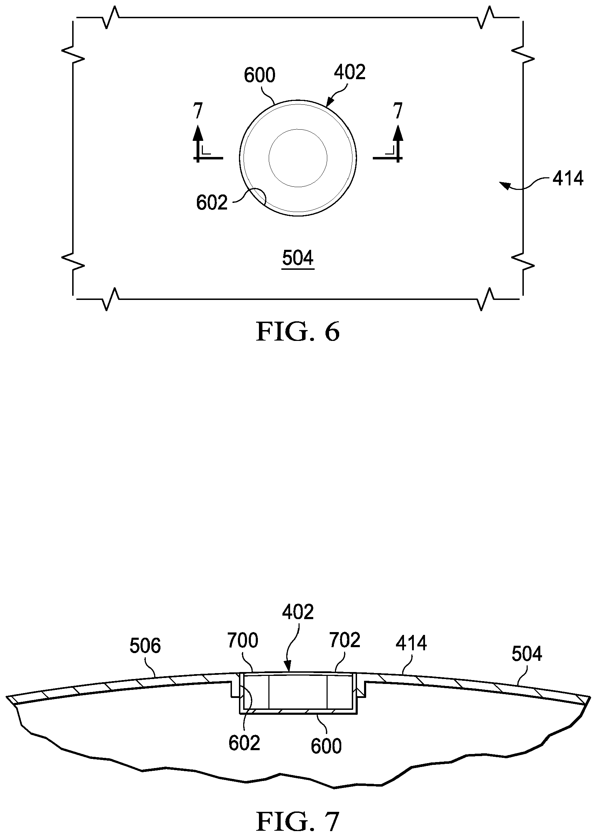

With reference now to **Figure 6****,** an illustration of a sensor is depicted in accordance with an illustrative embodiment. In this view, a more-detailed illustration of second sensor **402** is shown.

Second sensor **402** includes housing **600.** Housing **600** is designed to fit within opening **602** in first surface **504** of vertical stabilizer **120** in **Figure 1****.** Housing **600** is configured to have a shape that is substantially flush to first surface **504** when placed into opening **602.** Further, the shape of housing **600** is such that housing **600** substantially conforms to curvature **506** in **Figure 5** of first surface **504.**

Turning now to **Figure 7****,** a cross-sectional view of a sensor installed in a vertical stabilizer is depicted in accordance with an illustrative embodiment. In this illustrative example, a cross-sectional view of second sensor **402** is seen taken along lines **7-7** in **Figure 6****.**

In this view, housing **600** is depicted such that surface **700** of housing **600** is substantially flush to first surface **504.** In particular, surface **700** of housing **600** has curvature **702** such that surface **700** of housing **600** substantially conforms to curvature **506** of first surface **504.**

The illustration of the sensors on vertical stabilizer **120** in **Figures 4-7** are not meant to imply physical or architectural limitations to the manner in which other illustrative embodiments may be implemented. For example, one or more additional ice detection assemblies in addition to or in place of ice detection assembly **426** may be located on vertical stabilizer **120.** In other illustrative examples, ice detection assembly **426** may be used in addition to or in place of the other sensors illustrated in **Figure 3****.** As another illustrative example, second sensor **402** in housing **600** may be used with other sensors illustrated in **Figure 1****.**

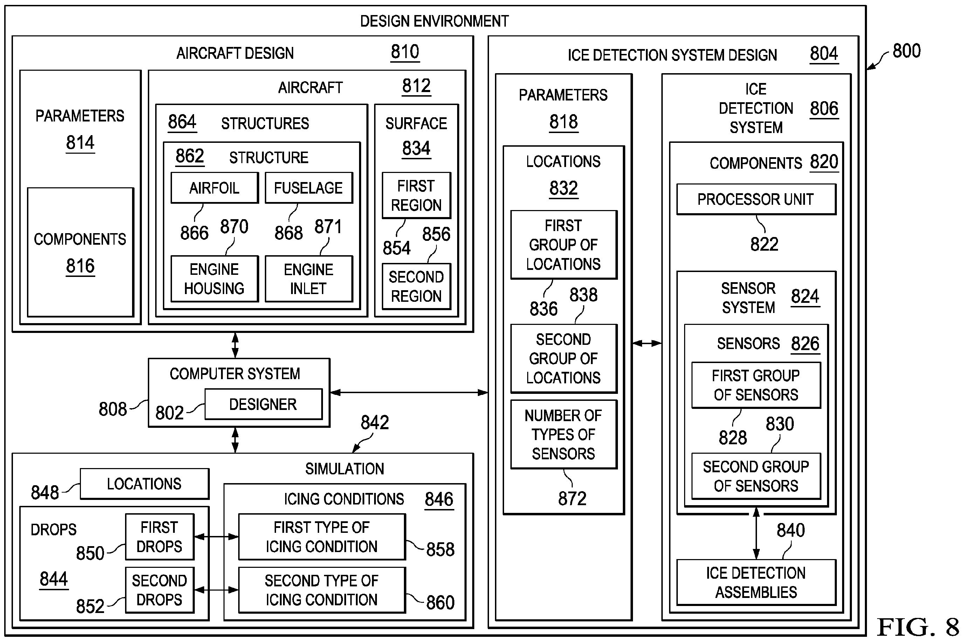

Turning now to **Figure 8****,** an illustration of a block diagram of a design environment is depicted in accordance with an illustrative embodiment. Design environment **800** may be used to design an ice detection system for an aircraft in which the ice detection system is configured to detect a number of types of icing conditions. In this illustrative example, designer **802** may be implemented to generate ice detection system design **804** for ice detection system **806.** Ice detection system **806** may be, for example, without limitation, ice detection system **122** in **Figure 1****.**

As illustrated, designer **802** may be implemented using software, hardware, or a combination of the two. In these illustrative examples, designer **802** may be implemented in computer system **808.** Computer system **808** comprises a number of computers. When more than one computer is present in computer system **808,** those computers may be in communication with each other. This communication may be facilitated using a communications medium, such as a network.

When designer **802** is implemented using software, designer **802** may take the form of program code that is configured to run on one or more computers. When hardware is employed, the hardware may include circuits that operate to perform the operations in designer **802.**

In the illustrative examples, the hardware may take the form of a circuit system, an integrated circuit, an application specific integrated circuit (ASIC), a programmable logic device, or some other suitable type of hardware configured to perform a number of operations. With a programmable logic device, the device is configured to perform the number of operations. The device may be reconfigured at a later time or may be permanently configured to perform the number of operations. Examples of programmable logic devices include, for example, a programmable logic array, a programmable array logic, a field programmable logic array, a field programmable gate array, and other suitable hardware devices. Additionally, the processes may be implemented in organic components integrated with inorganic components and/or may be comprised entirely of organic components excluding a human being.

In this illustrative example, ice detection system design **804** may be generated using aircraft design **810** for aircraft **812.** In other words, aircraft design **810** may be an input to designer **802** that is used to generate ice detection system **806.** In particular, parameters **814** in aircraft design **810** for components **816** in aircraft **812** may be used to generate parameters **818** for ice detection system **806** in ice detection system design **804.** Aircraft **812** may be, for example, aircraft **100** in **Figure** 1.

In this illustrative example, parameters **818** in ice detection system design **804** are for components **820** in ice detection system **806.** In these illustrative examples, components **820** in ice detection system **806** include processor unit **822** and sensor system **824.**

Sensor system **824** comprises sensors **826.** Sensors **826** include first group of sensors **828** and second group of sensors **830.** In these illustrative examples, parameters **818** include locations **832** for sensors **826** in sensor system **824.** In particular, locations **832** are locations on surface **834** of aircraft **812.** Locations **832** may be defined using coordinates for aircraft **812.**

In these illustrative examples, locations **832** include first group of locations **836** and second group of locations **838.** First group of locations **836** is for first group of sensors **828.** Second group of locations **838** is for second group of sensors **830.** Additionally, first group of sensors **828** and second group of sensors **830** may be arranged in ice detection assemblies **840** in which a first sensor in first group of sensors **828** and a second sensor in second group of sensors **830** are in an ice detection assembly in ice detection assemblies **840.**

Simulation **842** may be performed by computer system **808** to identify locations **832** for sensors **826.** In these illustrative examples, simulation **842** may simulate drops **844** for icing conditions **846.**

For example, simulation **842** may be performed to identify locations **848** on surface **834** of aircraft **812** where drops **844** will collide with surface **834** of aircraft **812.** In these examples, drops **844** include first drops **850** and second drops **852.** In this manner, simulation **842** may be used to identify first region **854** in which first drops **850** will collide with surface **834** and second region **856** in which second drops **852** will collide with surface **834** for different structures on aircraft **812.** The identification of locations **848** in simulation **842** may be used to identify locations **832** for sensors **826.**

In these illustrative examples, first group of locations **836** is selected such that first drops **850** in drops **844** for first type of icing condition **858** in icing conditions **846** collide with surface **834** in first group of locations **836.** Second group of locations **838** is selected such that second drops **852** in drops **844** for second type of icing condition **860** in icing conditions **846** collide with surface **834** of aircraft **812** in second group of locations **838.** In these illustrative examples, first drops **850** for first type of icing condition **858** may be normal supercooled drops. Second drops **852** for second type of icing condition **860** may be supercooled large drops in these illustrative examples.

In the depicted examples, first group of locations **836** may be within first region **854** on surface **834** of structure **862** in structures **864** in aircraft **812.** Second group of locations **838** may be located in second region **856** on surface **834** of structure **862.** In these illustrative examples, structure **862** in aircraft **812** may take the form of airfoil **866,** fuselage **868,** engine housing **870,** engine inlet **871,** and other suitable types of structures on aircraft **812.**

Further, simulation **842** also may be used to select the number of sensors within sensors **826** in addition to locations **832** for sensors **826.** Also, simulation **842** may be used to determine number of types of sensors **872** that may be used to implement sensors **826** in sensor system **824.**

The illustration of design environment **800** in **Figure 8** is not meant to imply physical or architectural limitations to the manner in which an illustrative embodiment may be implemented. Other components in addition to and/or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, ice detection system design **804** may be used to identify additional locations in locations **832** for sensors **826** to detect one or more additional types of icing conditions in addition to first type of icing condition **858** and second type of icing condition **860.**

In still other illustrative examples, designer **802** may be used to modify ice detection system design **804** instead of creating ice detection system design **804.** For example, ice detection system design **804** may already include first group of sensors **828** in first group of locations **836.** Ice detection system design **804** may be modified to identify second group of locations **838** for second group of sensors **830.** In this manner, designer **802** may be used to identify modifications to existing ice detection systems in these illustrative examples. In still other illustrative examples, ice detection system design **804** may be part of aircraft design **810** instead of a separate design.

The different components illustrated in **Figures 1-7** may be combined with components shown in **Figure 8****,** used with components in **Figure 8****,** or a combination of the two. Additionally, some of the components illustrated in **Figures 1-7** may be examples of how components shown in block form in **Figure 8** may be implemented as physical structures.

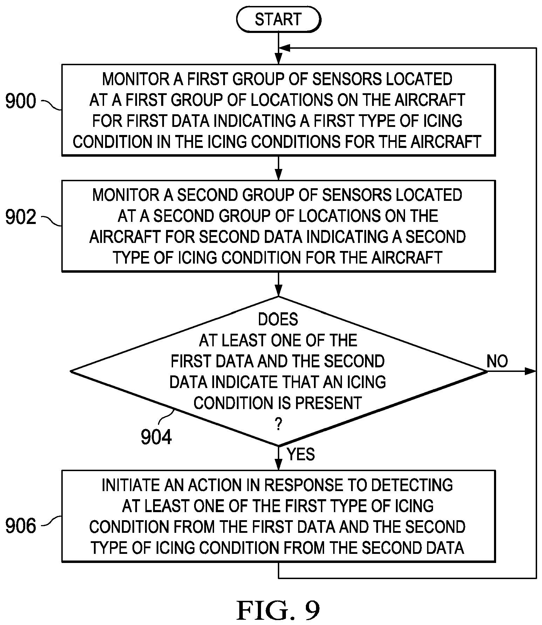

With reference now to **Figure 9****,** an illustration of a flowchart of a process for detecting icing conditions for an aircraft is depicted in accordance with an illustrative embodiment. The process illustrated in **Figure 9** may be implemented in an ice detection system, such as ice detection system **806** as specified by ice detection system design **804** in **Figure 8****.** Further, the process may be implemented in ice detection system **122** for aircraft **100** in **Figure 1****.** In particular, one or more operations performed in this flowchart may be implemented using processor unit **200** in **Figure 2****.**

The process begins by monitoring a first group of sensors located at a first group of locations on the aircraft for first data indicating a first type of icing condition in the icing conditions for the aircraft (operation **900).** The first group of sensors in operation **900** may be first group of sensors **148** in ice detection system **122** in **Figure** 1. The process then monitors a second group of sensors located at a second group of locations on the aircraft for second data indicating a second type of icing condition for the aircraft (operation **902).** The second group of sensors in operation **902** may be second group of sensors **170** in ice detection system **122** in **Figure 1****.**

A determination is made as to whether at least one of the first data and the second data indicates that an icing condition is present (operation **904).** If an icing condition is not present, the process returns to operation **900** as described above. Otherwise, the process initiates an action in response to detecting at least one of the first type of icing condition from the first data and the second type of icing condition from the second data (operation **906),** with the process then returning to operation **900** as described above.

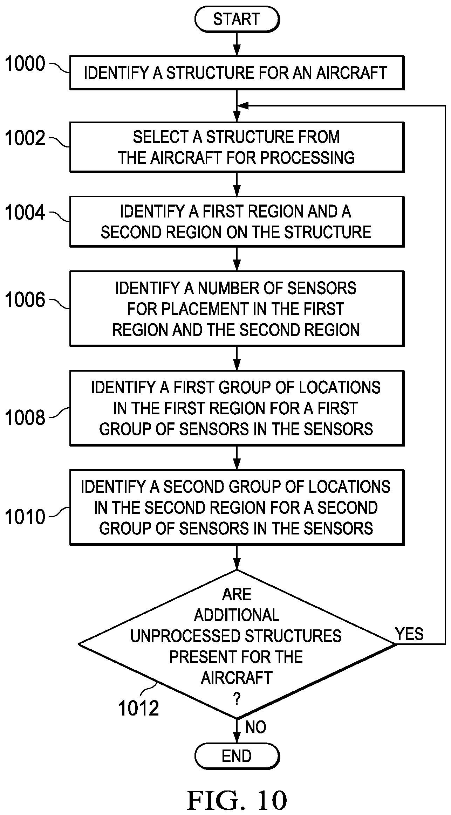

With reference now to **Figure 10****,** an illustration of a flowchart of a process for designing an ice detection system is depicted in accordance with an illustrative embodiment. The process illustrated in **Figure 10** may be implemented in design environment **800** in **Figure 8****.** In particular, the process may be implemented using designer **802** in **Figure 8****.**

The process begins by identifying a structure for an aircraft (operation **1000).** These structures may be any structure on which ice may form when one or more types of icing conditions are present. The process then selects a structure from the aircraft for processing (operation **1002**).

The process then identifies a first region and a second region on the structure (operation **1004).** The first region is a region in which first drops for a first type of icing condition collide with the surface of the aircraft. The second region is a region in which second drops for a second type of icing condition collide with the surface of the aircraft. The process then identifies a number of sensors for placement in the first region and the second region (operation **1006).** In some cases, sensors may be absent from one region on the structure, depending on the implementation.

The process then identifies a first group of locations in the first region for a first group of sensors in the sensors (operation **1008).** The process then identifies a second group of locations in the second region for a second group of sensors in the sensors (operation **1010).** A determination is made as to whether additional unprocessed structures are present for the aircraft (operation **1012).** If additional unprocessed structures are present, the process returns to operation **1002** as described above. Otherwise, the process terminates. When the process is completed, the design for the ice detection system may be finished and ready for implementation.

The flowcharts and block diagrams in the different depicted embodiments illustrate the architecture, functionality, and operation of some possible implementations of apparatuses, methods, and computer program products. In this regard, each block in the flowcharts or block diagrams may represent a module, segment, or portion of computer usable or readable program code, which comprises one or more executable instructions for implementing the specified function or functions. In some alternative implementations, the function or functions noted in the block may occur out of the order noted in the figures. For example, in some cases, two blocks shown in succession may be executed substantially concurrently, or the blocks may sometimes be executed in the reverse order, depending upon the functionality involved.

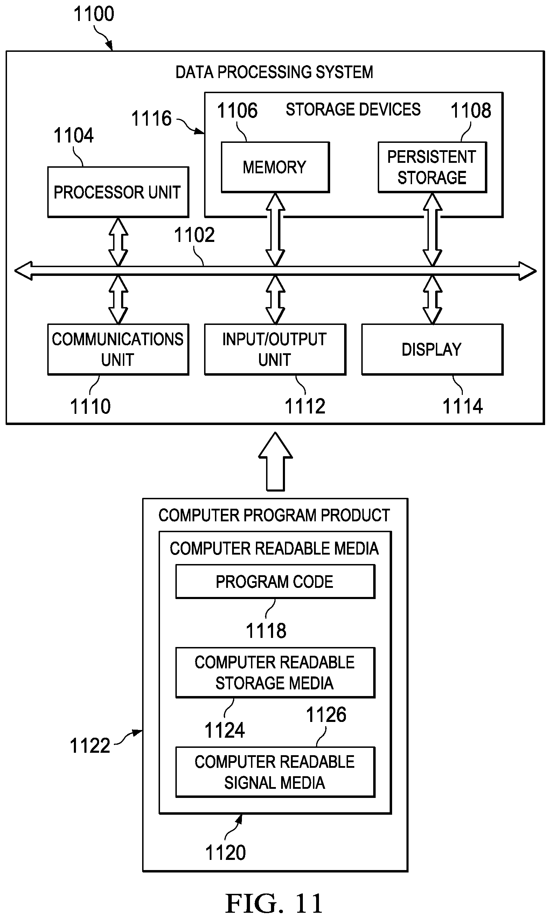

Turning now to **Figure 11****,** an illustration of a data processing system is depicted in accordance with an illustrative embodiment. Data processing system **1100** may be used to implement flight management system **208** in **Figure 2****,** computer system **808** in **Figure 8****,** and other computers that may be used in different illustrative embodiments. In this illustrative example, data processing system **1100** includes communications framework **1102,** which provides communications between processor unit **1104,** memory **1106,** persistent storage **1108,** communications unit **1110,** input/output (I/O) unit **1112,** and display **1114.** In this example, communications framework **1102** may take the form of a bus system.

Processor unit **1104** serves to execute instructions for software that may be loaded into memory **1106.** Processor unit **1104** may be a number of processors, a multi-processor core, or some other type of processor, depending on the particular implementation. In these illustrative examples, processor unit **1104** is an example of a processor unit that may be used to implement processor unit **200** in **Figure 2****.**

Memory **1106** and persistent storage **1108** are examples of storage devices **1116.** A storage device is any piece of hardware that is capable of storing information, such as, for example, without limitation, data, program code in functional form, and other suitable information either on a temporary basis or a permanent basis. Storage devices **1116** also may be referred to as computer readable storage devices in these illustrative examples. Memory **1106,** in these examples, may be, for example, a random access memory or any other suitable volatile or nonvolatile storage device. Persistent storage **1108** may take various forms, depending on the particular implementation.

For example, persistent storage **1108** may contain one or more components or devices. For example, persistent storage **1108** may be a hard drive, a flash memory, a rewritable optical disk, a rewritable magnetic tape, or some combination of the above. The media used by persistent storage **1108** also may be removable. For example, a removable hard drive may be used for persistent storage **1108.**

Communications unit **1110,** in these illustrative examples, provides for communications with other data processing systems or devices. In these illustrative examples, communications unit **1110** is a network interface card.

Input/output unit **1112** allows for input and output of data with other devices that may be connected to data processing system **1100.** For example, input/output unit **1112** may provide a connection for user input through a keyboard, a mouse, and/or some other suitable input device. Further, input/output unit **1112** may send output to a printer. Display **1114** provides a mechanism to display information to a user.

Instructions for the operating system, applications, and/or programs may be located in storage devices **1116,** which are in communication with processor unit **1104** through communications framework **1102.** The processes of the different embodiments may be performed by processor unit **1104** using computer-implemented instructions, which may be located in a memory, such as memory **1106.**

These instructions are referred to as program code, computer usable program code, or computer readable program code that may be read and executed by a processor in processor unit **1104.** The program code in the different embodiments may be embodied on different physical or computer readable storage media, such as memory **1106** or persistent storage **1108.**

Program code **1118** is located in a functional form on computer readable media **1120** that is selectively removable and may be loaded onto or transferred to data processing system **1100** for execution by processor unit **1104.** Program code **1118** and computer readable media **1120** form computer program product **1122** in these illustrative examples. In one example, computer readable media **1120** may be computer readable storage media **1124** or computer readable signal media **1126.**

In these illustrative examples, computer readable storage media **1124** is a physical or tangible storage device used to store program code **1118** rather than a medium that propagates or transmits program code **1118.** Alternatively, program code **1118** may be transferred to data processing system **1100** using computer readable signal media **1126.** Computer readable signal media **1126** may be, for example, a propagated data signal containing program code **1118.** For example, computer readable signal media **1126** may be an electromagnetic signal, an optical signal, and/or any other suitable type of signal. These signals may be transmitted over communications links, such as wireless communications links, optical fiber cable, coaxial cable, a wire, and/or any other suitable type of communications link.

The different components illustrated for data processing system **1100** are not meant to provide physical or architectural limitations to the manner in which different embodiments may be implemented. The different illustrative embodiments may be implemented in a data processing system including components in addition to and/or in place of those illustrated for data processing system **1100.** Other components shown in **Figure 11** can be varied from the illustrative examples shown. The different embodiments may be implemented using any hardware device or system capable of running program code **1118.**

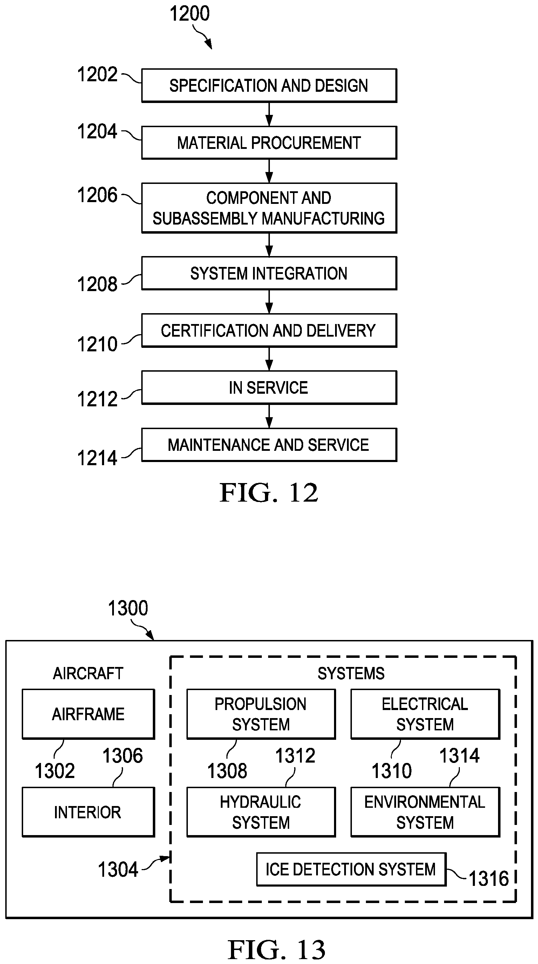

Illustrative embodiments of the disclosure may be described in the context of aircraft manufacturing and service method **1200** as shown in **Figure 12** and aircraft **1300** as shown in **Figure 13****.** Turning first to **Figure 12****,** an illustration of an aircraft manufacturing and service method is depicted in accordance with an illustrative embodiment. During pre-production, aircraft manufacturing and service method **1200** may include specification and design **1202** of aircraft **1300** in **Figure 13** and material procurement **1204.**

During production, component and subassembly manufacturing **1206** and system integration **1208** of aircraft **1300** takes place. Thereafter, aircraft **1300** may go through certification and delivery **1210** in order to be placed in service **1212.** While in service **1212** by a customer, aircraft **1300** is scheduled for routine maintenance and service **1214,** which may include modification, reconfiguration, refurbishment, and other maintenance or service.

Each of the processes of aircraft manufacturing and service method **1200** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 13****,** an illustration of an aircraft is depicted in which an illustrative embodiment may be implemented. In this example, aircraft **1300** is produced by aircraft manufacturing and service method **1200** in **Figure 12** and may include airframe **1302** with plurality of systems **1304** and interior **1306.** Examples of systems **1304** include one or more of propulsion system **1308,** electrical system **1310,** hydraulic system **1312,** environmental system **1314,** and ice detection system **1316.** Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method **1200** in **Figure 12****.** In one illustrative example, components or subassemblies produced in component and subassembly manufacturing **1206** may be fabricated or manufactured in a manner similar to components or subassemblies produced while aircraft **1300** is in service **1212.**

As yet another example, one or more apparatus embodiments, method embodiments, or a combination thereof may be utilized during different stages of aircraft manufacturing and service method **1200.** For example, ice detection system **1316** may be designed during specification and design **1202.** Components for ice detection system **1316** may be manufactured during component and subassembly manufacturing **1206.** Ice detection system **1316** may be installed in aircraft **1300** during system integration **1208.** Ice detection system **1316** may be used while aircraft **1300** is in service **1212.**

In another illustrative example, ice detection system **1316** may be an existing ice detection system in aircraft **1300.** Upgrades, modifications, and other operations may be performed to modify ice detection system **1316** on aircraft **1300** to include features in accordance with an illustrative embodiment.

In the figures and the text above, in one aspect, an ice detection system 806 includes: a first sensor 400 located on a leading edge 412 of a vertical stabilizer 120 on an aircraft 100, wherein the first sensor 400 is configured to detect a first type of icing condition 858 for the aircraft 100; a second sensor 402 located on a first side 414 of the vertical stabilizer 120, wherein the second sensor 402 is configured to detect a second type of icing condition 860 for the aircraft 100; and a third sensor 404 located on a second side 416 of the vertical stabilizer 120, wherein the third sensor 404 is configured to detect the second type of icing condition 860 for the aircraft 100.

In one variant, the ice detection system 806 includes wherein the first sensor 400, the second sensor 402, and the third sensor 404 generate data 202 and further including: a processor unit 822 configured to monitor the data 202 from the first sensor 400, the second sensor 402, and the third sensor 404 and perform an action in response to the data 202 indicating a presence of at least one of the first type of icing condition 858 and the second type of icing condition 860. In another variant, the ice detection system 806 includes wherein the first sensor 400 is substantially flush to a surface 500 of the leading edge 412 of the vertical stabilizer 120 and has a shape that substantially conforms to a curvature 502 of the leading edge 412 of the vertical stabilizer 120. In yet another variant, the ice detection system 806 includes wherein the second sensor 402 is substantially flush to a first surface 504 on the first side 414 of the vertical stabilizer 120 and has a first shape that substantially conforms to a curvature 502 of the first side 414 and the third sensor 404 is substantially flush to a second surface 416 on the second side 416 of the vertical stabilizer 120 and has a second shape that substantially conforms to a curvature 502 of the second side 416.

In one instance, the ice detection system 806 includes wherein a first location 406 of the first sensor 400 on the leading edge 412 is configured to expose the first sensor 400 to first drops 850 of water for the first type of icing condition 858 and wherein a second location 408 of the second sensor 402 on the first side 414 and a third location 410 of the third sensor 404 on the second side 416 are configured to expose the second sensor 402 and the third sensor 404 to second drops 852 of water for the second type of icing condition 860. In another instance, the ice detection system 806 includes wherein the first location 406 is a first height above a fuselage 106 of the aircraft 100, the second location 408 is a second height above the fuselage 106 of the aircraft 100, and the third location 410 is a third height above the fuselage 106 of the aircraft 100. In yet another instance, the ice detection system 806 includes wherein the second location 408 and the third location 410 are located along a line 424 extending from the first location 406 in a direction aft of the leading edge 416 of the vertical stabilizer 120.

In one example, the ice detection system 806 includes wherein the first type of icing condition 858 is caused by first drops 850 having a first number of sizes, the second type of icing condition 860 is caused by second drops 852 having a second number of sizes, and the first number of sizes is smaller than the second number of sizes. In another example, the ice detection system 806 includes wherein the second type of icing condition 860 is a supercooled large drop type of icing condition. In yet another example, the ice detection system 806 includes wherein the action is selected from at least one of generating an alert, generating a log entry, activating an anti-icing system 204, and sending a report. In still another example, the ice detection system 806 includes wherein the first sensor 400, the second sensor 402, and the third sensor 404 are configured to detect a presence of ice. In yet still another example, the ice detection system 806 includes wherein the aircraft 100 is selected from one of a commercial aircraft 100, a military aircraft 100, an airplane, and a helicopter.

In another aspect, an ice detection system 806 is disclosed including: a first sensor 400 located on a leading edge 412 of a vertical stabilizer 120 on an aircraft 100, wherein the first sensor 400 is in a first location 406 configured to detect a normal icing condition for the aircraft 100; a second sensor 402 located on a first side 414 of the vertical stabilizer 120, wherein the second sensor 402 is in a second location 408 configured to detect a supercooled large drop type of icing condition for the aircraft 100; a third sensor 404 located on a second side 416 of the vertical stabilizer 120, wherein the second side 416 is opposite of the first side 414 and wherein the third sensor 404 is in a third location 410 configured to detect the supercooled large drop type of icing condition for the aircraft 100; and a processor unit 822 configured to monitor data 202 from the first sensor 400, the second sensor 402, and the third sensor 404 and perform an action in response to the data 202 indicating a presence of at least one of the normal icing condition and the supercooled large drop type of icing condition.

In one variant, the ice detection system 806 includes wherein the first sensor 400 is substantially flush to a surface 500 of the leading edge 412 and has a shape that substantially conforms to a curvature 502 of the leading edge of the vertical stabilizer 120. In another variant, the ice detection system 806 includes wherein the second sensor 402 is substantially flush to a first surface 504 on the first side 414 of the vertical stabilizer 120 and has a first shape that substantially conforms to a curvature 502 of the first side 414 and the third sensor 404 is substantially flush to a second surface 508 on the second side 416 of the vertical stabilizer 120 and has a second shape that substantially conforms to a curvature 502 of the second side 416.

In yet another variant, the ice detection system 806 includes wherein the first location 406 is a first height above a fuselage 106 of the aircraft 100, the second location 408 is a second height above the fuselage 106 of the aircraft 100, and the third location 410 is a third height above the fuselage 106 of the aircraft 100 and wherein the second location 408 and the third location 410 are located along a line 424 extending from the first location 406 in a direction aft of the leading edge 412 of the vertical stabilizer 120. In one example, the ice detection system 806 includes wherein the action is selected from at least one of generating an alert, generating a log entry, activating an anti-icing system 204, and sending a report.

In one aspect, a method is disclosed for detecting icing conditions, the method includes: monitoring a first sensor 400 located on a leading edge 412 of a vertical stabilizer 120 on an aircraft 100 for first data 202 indicating a first type of icing condition 858 for the aircraft 100; monitoring a second sensor 402 located on a first side 414 of the vertical stabilizer 120 and a third sensor 404 located on a second side 416 of the vertical stabilizer 120 for second data 202 indicating a second type of icing condition 860 for the aircraft 100; and initiating an action in response to detecting at least one of the first type of icing condition 858 from the first data 202 and the second type of icing condition 806 from the second data 202.

In one variant, the method further includes: responsive to detecting at the least one of the first type of icing condition 860 from the first data 202 and the second type of icing condition 860 from the second data 202, identifying a location on the aircraft 100 in which the at least one of the first type of icing condition 858 and the second type of icing condition 860 is detected. In another variant, the method includes wherein initiating the action in response to detecting the at least one of the first type of icing condition 858 from the first data 202 and the second type of icing condition 860 from the second data 202 includes: initiating the action in response to detecting the at least one of the first type of icing condition 858 from the first data 202 and the second type of icing condition 860 from the second data 202, wherein the action is selected from at least one of generating an alert, generating a log entry, activating an anti-icing system 204, and sending a report.

Thus, one or more illustrative embodiments provide a method and apparatus for identifying different types of icing conditions. In particular, an illustrative embodiment provides an ability to identify a first type of icing condition and a second type of icing condition. The first type of icing condition may be one typically encountered, while the second type of icing condition may be a supercooled large drop icing condition. In these illustrative examples, the ability to identify more than one type of icing condition may allow an aircraft to be certified for flight in different types of icing conditions under various regulations that may be present from government or other regulatory entities, such as the Federal Aviation Administration.

The description of the different illustrative embodiments has been presented for purposes of illustration and description and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. An ice detection system (806) comprising:
a first sensor (400) located on a leading edge (412) of a vertical stabilizer (120) on an aircraft (100), wherein the first sensor (400) is configured to detect a first type of icing condition (858) for the aircraft (100);
a second sensor (402) located on a first side (414) of the vertical stabilizer (120), wherein the second sensor (402) is configured to detect a second type of icing condition (860) for the aircraft (100); and
a third sensor (404) located on a second side (416) of the vertical stabilizer (120), wherein the third sensor (404) is configured to detect the second type of icing condition (860) for the aircraft (100);
wherein a first location (406) of the first sensor (400) on the leading edge (412) is configured to expose the first sensor (400) to first drops (850) of water for the first type of icing condition (858) and wherein a second location (408) of the second sensor (402) on the first side (414) and a third location (410) of the third sensor (404) on the second side (416) are configured to expose the second sensor (402) and the third sensor (404) to second drops (852) of water for the second type of icing condition (860); and
wherein the first location (406) is a first height above a fuselage (106) of the aircraft (100), the second location (408) is a second height above the fuselage (106) of the aircraft (100), and the third location (410) is a third height above the fuselage (106) of the aircraft (100).

2. The ice detection system (806) of claim 1, wherein the first sensor (400), the second sensor (402), and the third sensor (404) generate data (202) and further comprising:
a processor unit (822) configured to monitor the data (202) from the first sensor (400), the second sensor (402), and the third sensor (404) and perform an action in response to the data (202) indicating a presence of at least one of the first type of icing condition (858) and the second type of icing condition (860).

3. The ice detection system (806) of any of claims 1 or 2, wherein the first sensor (400) is substantially flush to a surface (500) of the leading edge (412) of the vertical stabilizer (120) and has a shape that substantially conforms to a curvature (502) of the leading edge (412) of the vertical stabilizer (120).

4. The ice detection system (806) of any of claims 1-3, wherein the second sensor (402) is substantially flush to a first surface (504) on the first side (414) of the vertical stabilizer (120) and has a first shape that substantially conforms to a curvature (502) of the first side (414) and the third sensor (404) is substantially flush to a second surface (416) on the second side (416) of the vertical stabilizer (120) and has a second shape that substantially conforms to a curvature (502) of the second side (416).

5. The ice detection system (806) of claim 1, wherein the first type of icing condition (858) is caused by first drops (850) having a first number of sizes, the second type of icing condition (860) is caused by second drops (852) having a second number of sizes, and the first number of sizes is smaller than the second number of sizes.

6. The ice detection system (806) of any of claims 1-5, wherein the second type of icing condition (860) is a supercooled large drop type of icing condition.

7. The ice detection system (806) of claim 2, wherein the action is selected from at least one of generating an alert, generating a log entry, activating an anti-icing system (204), and sending a report.

8. The ice detection system (806) of any of claims 1-7, wherein the first sensor (400), the second sensor (402), and the third sensor (404) are configured to detect a presence of ice.

9. The ice detection system (806) of any of claims 1-8, wherein the aircraft (100) is selected from one of a commercial aircraft (100), a military aircraft (100), an airplane, and a helicopter.

10. A method for detecting icing conditions, the method comprising:
monitoring a first sensor (400) located on a leading edge (412) of a vertical stabilizer (120) on an aircraft (100) for first data (202) indicating a first type of icing condition (858) for the aircraft (100);
monitoring a second sensor (402) located on a first side (414) of the vertical stabilizer (120) and a third sensor (404) located on a second side (416) of the vertical stabilizer (120) for second data (202) indicating a second type of icing condition (860) for the aircraft (100); and
initiating an action in response to detecting at least one of the first type of icing condition (858) from the first data (202) and the second type of icing condition (806) from the second data (202);
wherein a first location (406) of the first sensor (400) on the leading edge (412) is configured to expose the first sensor (400) to first drops (850) of water for the first type of icing condition (858) and wherein a second location (408) of the second sensor (402) on the first side (414) and a third location (410) of the third sensor (404) on the second side (416) are configured to expose the second sensor (402) and the third sensor (404) to second drops (852) of water for the second type of icing condition (860); and
wherein the first location (406) is a first height above a fuselage (106) of the aircraft (100), the second location (408) is a second height above the fuselage (106) of the aircraft (100), and the third location (410) is a third height above the fuselage (106) of the aircraft (100).

11. The method of claim 10 further comprising:
responsive to detecting at the least one of the first type of icing condition (860) from the first data (202) and the second type of icing condition (860) from the second data (202), identifying a location on the aircraft (100) in which the at least one of the first type of icing condition (858) and the second type of icing condition (860) is detected.

12. The method of any of claims 10 or 11, wherein initiating the action in response to detecting the at least one of the first type of icing condition (858) from the first data (202) and the second type of icing condition (860) from the second data (202) comprises:
initiating the action in response to detecting the at least one of the first type of icing condition (858) from the first data (202) and the second type of icing condition (860) from the second data (202), wherein the action is selected from at least one of generating an alert, generating a log entry, activating an anti-icing system (204), and sending a report.

## Patentansprüche

1. Eiserkennungssystem (806), das aufweist:
einen ersten Sensor (400), der sich an einer Vorderkante (412) eines Seitenleitwerks (120) an einem Flugzeug (100) befindet, wobei der erste Sensor (400) dazu konfiguriert ist, einen ersten Vereisungszustandstyp (858) für das Flugzeug (100) zu erkennen;
einen zweiten Sensor (402), der sich an einer ersten Seite (414) des Seitenleitwerks (120) befindet, wobei der zweite Sensor (402) dazu konfiguriert ist, einen zweiten Vereisungszustandstyp (860) für das Flugzeug (100) zu erkennen; und
einen dritten Sensor (404), der sich an einer zweiten Seite (416) des Seitenleitwerks (120) befindet, wobei der dritte Sensor (404) dazu konfiguriert ist, den zweiten Vereisungszustandstyp (860) für das Flugzeug (100) zu erkennen;
wobei eine erste Stelle (406) des ersten Sensors (400) an der Vorderkante (412) dazu konfiguriert ist, den ersten Sensor (400) ersten Tropfen (850) von Wasser für den ersten Vereisungszustandstyp (860) auszusetzen, und wobei eine zweite Stelle (408) des zweiten Sensors (402) an der ersten Seite (414) und eine dritte Stelle (410) des dritten Sensors (404) an der zweiten Seite (416) dazu konfiguriert sind, den zweiten Sensor (402) und den dritten Sensor (404) zweiten Tropfen (852) von Wasser für den zweiten Vereisungszustandstyp (860) auszusetzen; und
wobei die erste Stelle (406) eine erste Höhe oberhalb eines Rumpfs (106) des Flugzeugs (100) ist, die zweite Stelle (408) eine zweite Höhe oberhalb des Rumpfs (106) des Flugzeugs (100) ist, und die dritte Stelle (410) eine dritte Höhe oberhalb des Rumpfs (106) des Flugzeugs (100) ist.

2. Eiserkennungssystem (806) nach Anspruch 1, wobei der erste Sensor (400), der zweite Sensor (402) und der dritte Sensor (404) Daten (202) erzeugen und des Weiteren aufweisen:
eine Prozessoreinheit (822), die dazu konfiguriert ist, die Daten (202) von dem ersten Sensor (400), dem zweiten Sensor (402) und dem dritten Sensor (404) zu überwachen und im Ansprechen darauf, dass die Daten (202) das Vorhandensein von wenigstens einem des ersten Vereisungszustandstyps (858) und des zweiten Vereisungszustandstyps (860) anzeigen, eine Aktion durchzuführen.

3. Eiserkennungssystem (806) nach einem der Ansprüche 1 oder 2, wobei der erste Sensor (400) mit einer Oberfläche (500) der Vorderkante (412) des Seitenleitwerks (120) im Wesentlichen fluchtet und eine Form hat, die im Wesentlichen einer Krümmung (502) der Vorderkante (412) des Seitenleitwerks (120) entspricht.

4. Eiserkennungssystem (806) nach einem der Ansprüche 1 bis 3, wobei der zweite Sensor (402) mit einer ersten Oberfläche (504) an der ersten Seite (414) des Seitenleitwerks (120) im Wesentlichen fluchtet und eine erste Form hat, die im Wesentlichen einer Krümmung (502) der ersten Seite (414) entspricht, und der dritte Sensor (404) mit einer zweiten Oberfläche (416) an der zweiten Seite (416) des Seitenleitwerks (120) im Wesentlichen fluchtet und eine zweite Form hat, die im Wesentlichen einer Krümmung (502) der zweiten Seite (416) entspricht.

5. Eiserkennungssystem (806) nach Anspruch 1, wobei der erste Vereisungszustandstyp (858) durch erste Tropfen (850) verursacht wird, die eine erste Zahl von Größen haben, der zweite Vereisungszustandstyp(860) durch zweite Tropfen (852) verursacht wird, die eine zweite Zahl von Größen haben, und die erste Zahl von Größen kleiner ist, als die zweite Zahl von Größen.

6. Eiserkennungssystem (806) nach einem der Ansprüche 1 bis 5, wobei der zweite Vereisungszustandstyp (860) ein Vereisungszustandstyp unterkühlter Großtropfen ist.

7. Eiserkennungssystem (806) nach Anspruch 2, wobei die Aktion ausgewählt wird aus wenigstens einem von Erzeugen einer Warnung, Erzeugen eines Logeintrags, Aktivieren eines Enteisungssystems (204) und Senden eines Berichts.

8. Eiserkennungssystem (806) nach einem der Ansprüche 1 bis 7, wobei der erste Sensor (400), der zweite Sensor (402) und der dritte Sensor (404) dazu konfiguriert sind, das Vorhandensein von Eis zu erkennen.

9. Eiserkennungssystem (806) nach einem der Ansprüche 1 bis 8, wobei das Flugzeug (100) ausgewählt wird aus einem eines Verkehrsflugzeugs (100), eines Militärflugzeugs (100), eines Flugzeugs und eines Helikopters.

10. Verfahren zum Erkennen von Vereisungszuständen, wobei das Verfahren aufweist:
Überwachen eines ersten Sensors (400), der sich an einer Vorderkante (412) eines Seitenleitwerks (120) an einem Flugzeug (100) befindet, hinsichtlich erster Daten (202), die einen ersten Vereisungszustandstyp (858) für das Flugzeug (100) anzeigen;
Überwachen eines zweiten Sensors (402), der sich an einer ersten Seite (414) des Seitenleitwerks (120) befindet, und eines dritten Sensors (404), der sich an einer zweiten Seite (416) des Seitenleitwerks (120) befindet, hinsichtlich zweiter Daten (202), die einen zweiten Vereisungszustandstyp (860) für das Flugzeug (100) anzeigen; und
Initiieren einer Aktion im Ansprechen darauf, dass wenigstens einer des ersten Vereisungszustandstyps (858) aus den ersten Daten (202) und des zweiten Vereisungszustandstyps (860) aus den zweiten Daten (202) erkannt wird;
wobei eine erste Stelle (406) des ersten Sensors (400) an der Vorderkante (412) dazu konfiguriert ist, den ersten Sensor (400) ersten Tropfen (850) von Wasser für den ersten Vereisungszustandstyp (858) auszusetzen, und wobei eine zweite Stelle (408) des zweiten Sensors (402) an der ersten Seite (414) und eine dritte Stelle (410) des dritten Sensors (404) an der zweiten Seite (416) dazu konfiguriert sind, den zweiten Sensor (402) und den dritten Sensor (404) zweiten Tropfen (852) von Wasser für den zweiten Vereisungszustandstyp (860) auszusetzen; und
wobei die erste Stelle (406) eine erste Höhe oberhalb eines Rumpfs (106) des Flugzeugs (100) ist, die zweite Stelle (408) eine zweite Höhe oberhalb des Rumpfs (106) des Flugzeugs (100) ist, und die dritte Stelle (410) eine dritte Höhe oberhalb des Rumpfs (106) des Flugzeugs (100) ist.

11. Verfahren nach Anspruch 10, das des Weiteren aufweist:
im Ansprechen auf das Erkennen des wenigstens einen des ersten Vereisungszustandstyps (860) aus den ersten Daten (202) und des zweiten Vereisungszustandstyps (860) aus den zweiten Daten (202), Identifizieren einer Stelle an dem Flugzeug (100), an der der wenigstens eine des ersten Vereisungszustandstyps (858) und des zweiten Vereisungszustandstyps (860) erkannt wird.

12. Verfahren nach einem der Ansprüche 10 oder 11, wobei das Initiieren der Aktion im Ansprechen auf das Erkennen des wenigstens einen des ersten Vereisungszustandstyps (858) aus den ersten Daten (202) und des zweiten Vereisungszustandstyps (860) aus den zweiten Daten (202) aufweist:
Initiieren der Aktion im Ansprechen auf das Erkennen des wenigstens einen des ersten Vereisungszustandstyps (858) aus den ersten Daten (202) und des zweiten Vereisungszustandstyps (860) aus den zweiten Daten (202), wobei die Aktion ausgewählt wird aus wenigstens einem von Erzeugen einer Warnung, Erzeugen eines Logeintrags, Aktivieren eines Enteisungssystems (204) und Senden eines Berichts.

## Revendications

1. Système de détection de glace (806) comprenant :
un premier capteur (400) situé sur un bord d'attaque (412) d'un stabilisateur vertical (120) sur un avion (100), le premier capteur (400) étant conçu pour détecter un premier type de condition de givrage (858) pour l'avion (100) ;
un deuxième capteur (402) situé sur un premier côté (414) du stabilisateur vertical (120), le deuxième capteur (402) étant conçu pour détecter un second type de condition de givrage (860) pour l'avion (100) ; et
un troisième capteur (404) situé sur un second côté (414) du stabilisateur vertical (120), le troisième capteur (402) étant conçu pour détecter le second type de condition de givrage (860) pour l'avion (100) ;
un premier emplacement (406) du premier capteur (400) sur le bord d'attaque (412) étant configuré pour exposer le premier capteur (400) à de premières gouttes (850) d'eau pour le premier type de condition de givrage (858), et
un deuxième emplacement (408) du deuxième capteur (402) sur le premier côté (414) et un troisième emplacement (410) du troisième capteur (404) sur le second côté (416) étant configurés pour exposer le deuxième capteur (402) et le troisième capteur (404) à de deuxièmes gouttes (852) d'eau pour le second type de condition de givrage (860) ; et
le premier emplacement (406) étant à une première hauteur au-dessus du fuselage (106) de l'avion (100), le deuxième emplacement (408) étant à une deuxième hauteur au-dessus du fuselage (106) de l'avion (100), et le troisième emplacement (410) étant à une troisième hauteur au-dessus du fuselage (106) de l'avion (100).

2. Système de détection de glace (806) selon la revendication 1, dans lequel le premier capteur (400), le deuxième capteur (402) et le troisième capteur (404) génèrent des données (202), et comprenant en outre :
une unité de processeur (822) conçue pour contrôler les données (202) en provenance du premier capteur (400), du deuxième capteur (402) et du troisième capteur (404) et pour effectuer une action en réponse aux données (202) indiquant la présence d'au moins un parmi le premier type de condition de givrage (858) et le second type de givrage (860).

3. Système de détection de glace (806) selon la revendication 1 ou 2, dans lequel le premier capteur (400) est substantiellement à hauteur d'une surface (500) du bord d'attaque (412) du stabilisateur vertical (120) et a une forme substantiellement conforme à une courbure (502) du bord d'attaque (412) du stabilisateur vertical (120).

4. Système de détection de glace (806) selon l'une quelconque des revendications 1 à 3, dans lequel le deuxième capteur (402) est substantiellement à hauteur d'une première surface (504) sur le premier côté (414) du stabilisateur vertical (120) et a une première forme substantiellement conforme à une courbure (502) du premier côté (414) et le troisième capteur (404) est substantiellement à hauteur d'une seconde surface (416) sur le second côté (416) du stabilisateur vertical (120) et a une seconde forme substantiellement conforme à une courbure (502) du second côté (416).

5. Système de détection de glace (806) selon la revendication 1, dans lequel le premier type de condition de givrage (858) est causé par de premières gouttes (850) ayant un premier nombre de tailles, le second type de condition de givrage (860) est causé par de secondes gouttes (852) ayant un second nombre de tailles, et le premier nombre de tailles est inférieur au second nombre de tailles.

6. Système de détection de glace (806) selon l'une quelconque des revendications 1 à 5, dans lequel le second type de condition de givrage (860) est un type de condition de givrage à base de grandes gouttes surfondues.

7. Système de détection de glace (806) selon la revendication 2, dans lequel l'action est choisie parmi au moins générer une alerte, générer une entrée de journal, activer un système de dégivrage (204) et envoyer un rapport.

8. Système de détection de glace (806) selon l'une quelconque des revendications 1 à 7, dans lequel le premier capteur (400), le deuxième capteur (402) et le troisième capteur (404) sont configurés pour détecter une présence de glace.

9. Système de détection de glace (806) selon l'une quelconque des revendications 1 à 8, dans lequel l'avion (100) est choisi parmi un avion commercial (100), un avion militaire (100), un aéroplane et un hélicoptère.

10. Procédé de détection de conditions de givrage, le procédé comprenant de :
contrôler un premier capteur (400) situé sur un bord d'attaque (412) d'un stabilisateur vertical (120) sur un avion (100) pour repérer des premières données (202) indiquant un premier type de condition de givrage (858) pour l'avion (100) ;
contrôler un deuxième capteur (402) situé sur un premier côté (412) d'un stabilisateur vertical (120) et un troisième capteur (404) situé sur un second côté (416) du stabilisateur vertical (120) pour repérer des secondes données (202) indiquant un second type de condition de givrage (860) pour l'avion (100) ; et
initier une action en réponse à la détection d'au moins un parmi le premier type de condition de givrage (858) à partir des premières données (202) et le second type de condition de givrage (860) à partir des secondes données (202) ;
un premier emplacement (406) du premier capteur (400) sur le bord d'attaque (412) étant configuré pour exposer le premier capteur (400) à de premières gouttes (850) d'eau pour le premier type de condition de givrage (858), et
un deuxième emplacement (408) du deuxième capteur (402) sur le premier côté (414) et un troisième emplacement (410) du troisième capteur (404) sur le second côté (416) étant configurés pour exposer le deuxième capteur (402) et le troisième capteur (404) à de deuxièmes gouttes (852) d'eau pour le second type de condition de givrage (860) ; et
le premier emplacement (406) étant à une première hauteur au-dessus du fuselage (106) de l'avion (100), le deuxième emplacement (408) étant à une deuxième hauteur au-dessus du fuselage (106) de l'avion (100), et le troisième emplacement (410) étant à une troisième hauteur au-dessus du fuselage (106) de l'avion (100).

11. Procédé selon la revendication 10, comprenant en outre :
en réponse à la détection d'au moins un parmi le premier type de condition de givrage (858) à partir des premières données (202) et le second type de condition de givrage (860) à partir des secondes données (202), identifier un emplacement sur l'avion (100) où sont détectés le premier type de condition de givrage (858) et le second type de condition de givrage (860).

12. Procédé selon l'une quelconque des revendications 10 ou 11, dans lequel initier l'action en réponse à la détection d'au moins un parmi le premier type de condition de givrage (858) à partir des premières données (202) et le second type de condition de givrage (860) à partir des secondes données (202) comprend de : initier l'action en réponse à la détection de l'au moins un parmi le premier type de condition de givrage (858) à partir des premières données (202) et le second type de condition de givrage (860) à partir des secondes données (202), l'action étant choisie parmi au moins générer une alerte, générer une entrée de journal, activer un système de dégivrage (204) et envoyer un rapport.
